# EUROPEAN PATENT APPLICATION

(11) **EP 1 354 749 A2**
(43) Date of publication of application: **22.10.2003**
(21) Application number: 02014108.1
(22) Date of filing: 24.06.2002
(51) Int. Cl.: B60K 23/08

(54) **Power controlling device for four-wheel drive vehicle**

(30) Priority: 18.04.2002 KR 2002021329
(71) Applicant: KIA MOTORS CORPORATION, Seoul 137-938 (KR)
(72) Inventor: Lim, Jung-Hyo, 4-dong, Kumcheon-gu, Seoul 153-034 (KR)
(74) Representative: Viering, Jentschura & Partner

(57) **Abstract**

Disclosed is a power controlling device for a four-wheel drive vehicle capable of shifting a stable drive mode. The power controlling device includes an electromagnet 200, and a shift rod 210 operated by a magnetic field generated by the electromagnet 200 and having a fork 220 formed on one side thereof for operating the differential clutch gear 110, and a return spring 230 for constantly biasing the shift rod toward its original position.

## Description

### BACKGROUND OF THE INVENTION

### Field of the Invention

The present invention relates to a power controlling device for a four-wheel drive vehicle, and more particularly, to a power controlling device for a four-wheel drive vehicle capable of shifting a stable drive mode.

### Background of the Prior Art

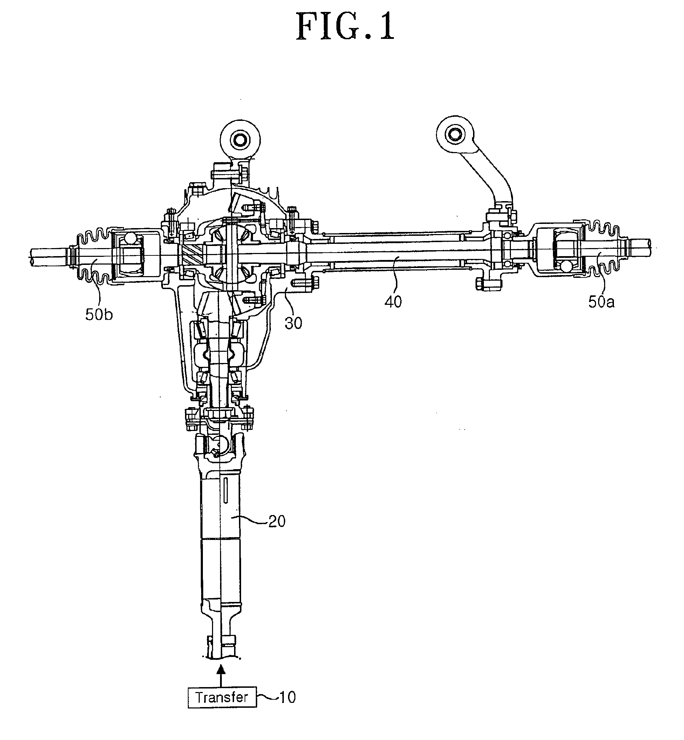

In general, a four-wheel drive vehicle of a rear-wheel part-time system includes a propeller shaft, a differential, a drive shaft, and so forth, so as to transfer a driving power to a front wheel according to the selection of a driver. Fig. 1 is a cross sectional view illustrating a front-wheel transmission of a four-wheel drive vehicle. The power transmitted through a transfer 10 drives a pinion gear engaged to a transmission shaft 20, and then is transmitted to left and right wheel drive shafts 50a and 50b through a ring gear meshed with the pinion gear.

If the above four-wheel drive vehicle is driven by only rear-wheel drive, the rotating force transmitted from front wheels causes the transmission shaft 20, the pinion gear, ring gear and wheel drive shafts 50a and 50b to be idled, thereby increasing gear noise and thus lowering fuel economy.

In order to overcome the above problem, Japanese Laid-Open Patent Publication Nos. 2001-50303 and 1999-303898 disclose a device for interrupting a portion of front-drive lines to minimize the number of idling parts when the power is not transferred to the front wheels. According to the above publications, the means interrupts the power outputted from the transfer to interrupt the idling parts, thereby preventing wear and damage of main clutch due to the idle. In addition, the device interrupts a mechanism interrupting the power transmission shaft 20, the pinion gear, and the ring gear and the wheel drive shafts 50a and 50b, thereby reducing the wear and noise of the idling parts.

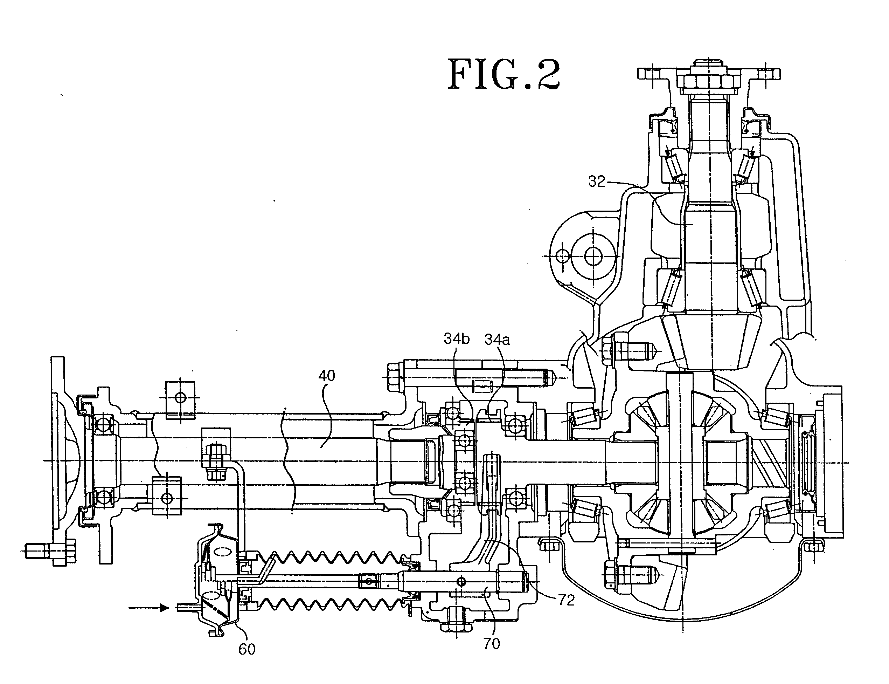

Fig. 2 shows an embodiment of an improved power controlling device for use in a four-wheel drive vehicle, the power controlling device including an actuator 60 for interrupting transmitted power. The actuator 60 uses a vacuum pressure generated from an engine as an actuating source, and sets any one of two chambers in the actuator as a vacuum state by controlling a solenoid valve so as to operate a shift rod 70. A fork 72 coupled to the shift rod and a sleeve interrupt a clutch gear, thereby preventing the idle of the transmission shaft in the two-wheel drive state and allowing the normal transmission in the four-wheel drive state.

The power controlling device employs the vacuum pressure generated from the engine, but the vacuum pressure is not uniform. Therefore, it is difficult to achieve the stable operation of the actuator.

In addition, the interruption of the clutch gear is performed by the solenoid valve, actuator and so forth. An excessive space containing the above parts is required. Furthermore, the need of separate lines for supplying the vacuum pressure causes the interior construction of the vehicle to be complicated, and the assembling efficiency to be reduced.

### SUMMARY OF THE INVENTION

Accordingly, the present invention is directed to a power controlling device for use in a four-wheel drive vehicle that substantially obviates one or more problems due to limitations and disadvantages of the related art.

It is an object of the present invention to provide a power controlling device for use in a four-wheel drive vehicle of a part-time system capable of facilitating connection and disconnection between a connecting shaft and a drive shaft of a differential.

Another object of the present invention is to provide a power controlling device for use in a four-wheel drive vehicle capable of simplifying the construction thereof.

In order to accomplish the above objects, the present invention provides a power controlling device for use in a four-wheel drive vehicle of a part-time system, in which one side of a differential is connected to a differential clutch gear and a connecting shaft clutch gear, the power controlling device comprising: an electromagnet; a shift rod operated by a magnetic field generated by the electromagnet to operate the differential clutch gear; and a return spring, positioned between the electromagnet and the shift rod, for constantly biasing the shift rod toward an original position thereof.

The electromagnet is positioned within an interior of a differential case, and an electric current is applied to the electromagnet from an electric power of the vehicle.

The shift rod has on one end thereof a fork engaging to the differential clutch gear.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:

Fig. 1 is a cross sectional view illustrating the construction of a front-wheel transmission for use in a four-wheel drive vehicle;

Fig. 2 is a cross sectional view illustrating the construction of a conventional power controlling device operating an actuator by use of a vacuum pressure of an engine;

Fig. 3 is a cross sectional view illustrating the construction of a power controlling device for use in a four-wheel drive vehicle of a part-time system according to a preferred embodiment of the present invention;

Fig. 4 is a circuit diagram of a power controlling device for use in a four-wheel drive vehicle of a part-time system according to a preferred embodiment of the present invention;

Fig. 5 is a view illustrating a four-wheel drive state of a power controlling device according to the present invention; and

Fig. 6 is a view illustrating a two-wheel drive state of a power controlling device according to the present invention.

### DETAILED DESCRIPTION OF THE PREFERRED EMBODIMENTS

Reference will now be made in detail to a preferred embodiment of the present invention.

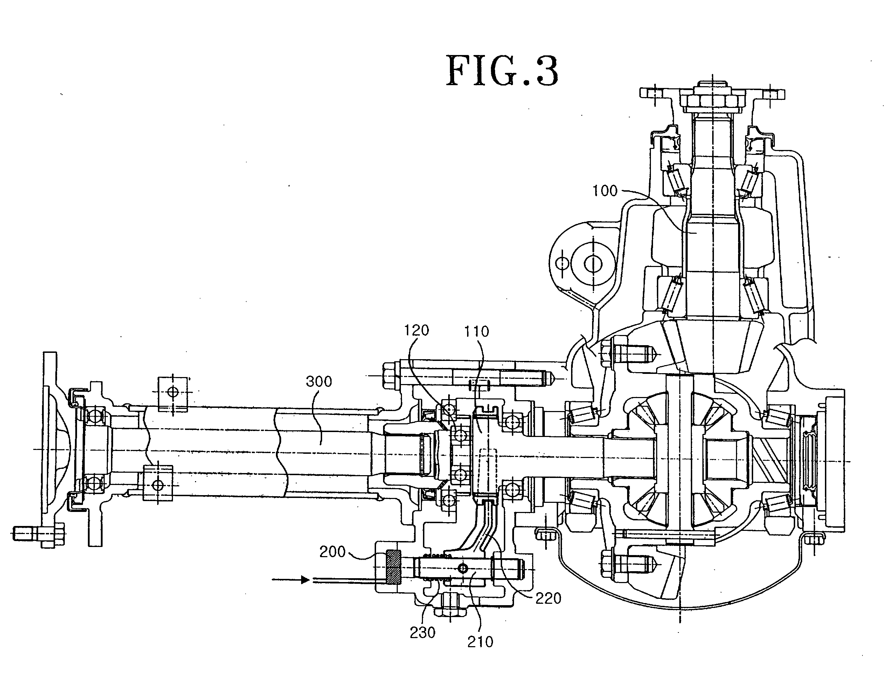

Fig. 3 is a cross sectional view illustrating the construction of a power controlling device employing an electromagnet, for use in a four-wheel drive vehicle of a part-time system according to a preferred embodiment of the present invention.

Referring to Fig. 3, a differential clutch gear 110 and a connecting shaft clutching gear 120 are installed to one side of a differential case. In order to interrupt the connection between the differential clutch gear 110 and the connecting shaft clutching gear 120, the device of the present invention includes an electromagnet 200, and a shift rod 210 operated by a magnetic field generated by the electromagnet 200 and having a fork 220 formed on one side thereof for operating the differential clutch gear 110, and a return spring 230 for constantly biasing the shift rod toward its original position.

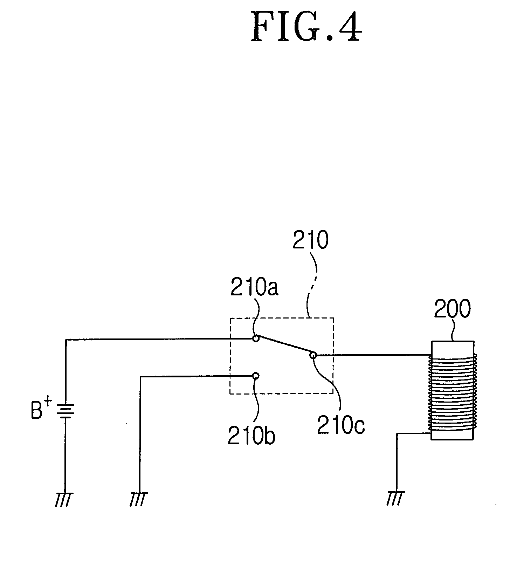

Fig. 4 is a circuit diagram of the power controlling device for use in the four-wheel drive vehicle of a part-time system according to a preferred embodiment of the present invention. The electromagnet 200 is connected to a drive shifting switch 201 provided in a cabin of the vehicle, and is connected to a terminal B+ of a battery of the vehicle. If the drive shifting switch 201 is shifted to select a four-wheel drive mode, a four-wheel drive terminal 201a is connected to an output terminal 201c, so that the electromagnet 200 is energized to form a strong magnetic field. If the drive shifting switch 201 is shifted to select a two-wheel drive mode, a two-wheel drive terminal 201b is connected to the output terminal 201c, so that the electromagnet 200 is deenergized.

The electromagnet employs a common iron core, but as an alternative an electromagnet employing a superconductor having a high critical magnetic field may be used.

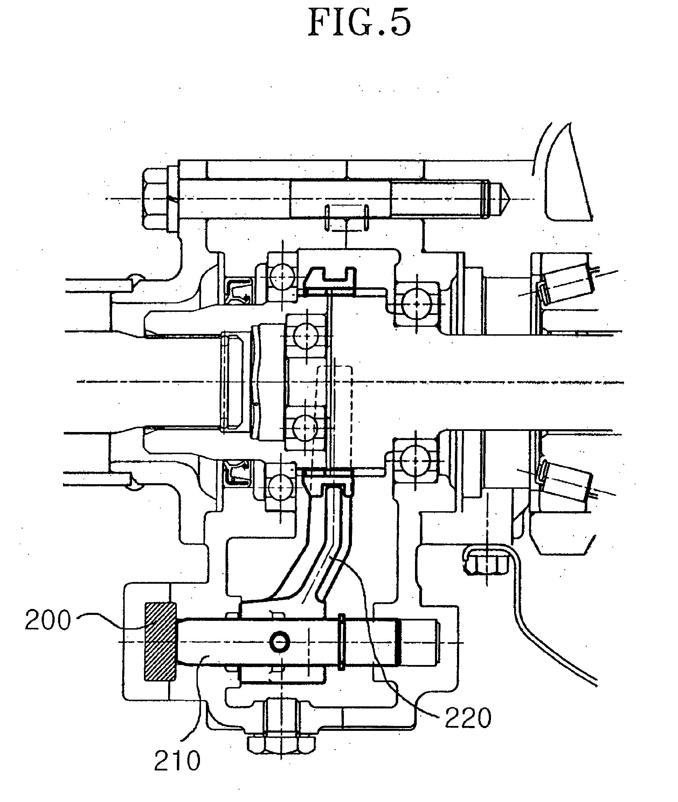

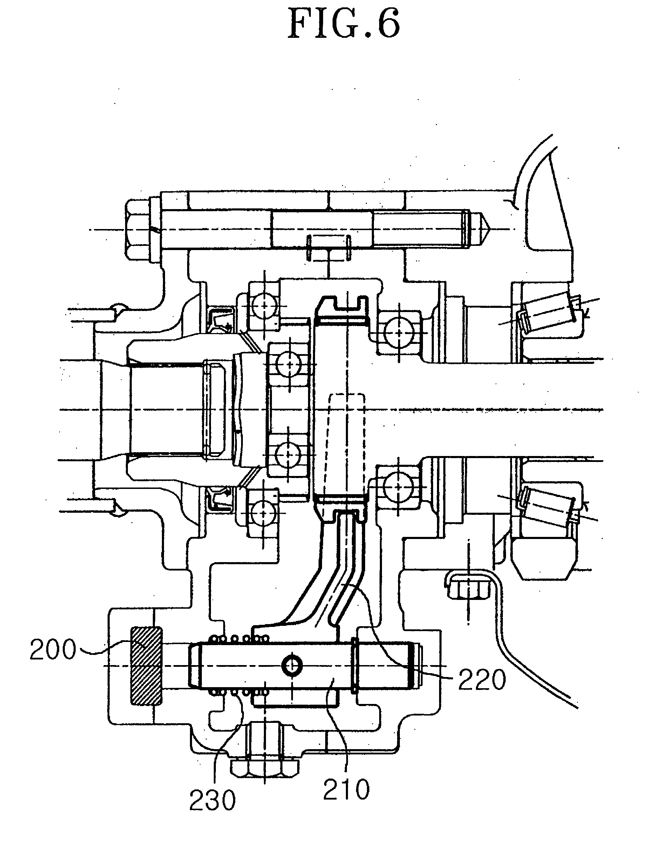

Fig. 5 is a view illustrating a four-wheel drive state of the power controlling device according to the present invention, and Fig. 6 is a view illustrating a two-wheel drive state of the power controlling device according to the present invention. The operation of the power controlling device for use in the four-wheel drive vehicle of a part-time system will now be described in detail with reference to Figs. 5 and 6.

If the drive shifting switch 201 provided in the cabin of the vehicle is shifted to select the four-wheel drive mode, the electromagnet 200 is energized by an electric current supplied from the battery to form the strong magnetic field. The formed magnetic field attracts the shift rod 210 provided one side of the electromagnet. Since the fork 220 is attached to one side of the shift rod 210, and the differential clutch gear is connected to the fork 220, the differential gear is moved and meshed with the connecting shaft clutch gear in accordance with the movement of the shift rod 210 toward the electromagnet 200 due to the generated magnetic field. Accordingly, a wheel drive shaft is rotated by the driving force transmitted through the transmission shaft to perform the four-wheel drive.

Meanwhile, if the drive shifting switch 201 is shifted to select the two-wheel drive mode, the electromagnet 200 is deenergized by interrupting the electric current supplied from the battery to disappear the magnetic field. The shift rod 210 is under a state free from the magnetic field. The return spring 230 provided one side of the shift rod 210 urges the shift rod 210 toward its original position using the biasing force of the return spring. At that time, the differential clutch gear connected to one end of the fork 220 is returned together with the shift rod, and thus is detached from the connecting shaft clutch gear to achieve the two-wheel drive.

With the construction described above, the shift of the connecting shaft to the four-wheel drive mode or the two-wheel drive mode may be easily achieved by the electromagnet.

In addition, since a constant level of the electric current is applied to the electromagnet from the battery of the vehicle, it is possible to shift the running mode stably. The simplified construction of the device of present invention may cause the maintenance thereof to be facilitated. Furthermore, the decreased number of the parts may achieve the lightness of the vehicle.

The forgoing embodiment is merely exemplary and is not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A power controlling device for use in a four-wheel drive vehicle of a part-time system, in which one side of a differential is connected to a differential clutch gear and a connecting shaft clutch gear, the power controlling device comprising:
an electromagnet;
a shift rod operated by a magnetic field generated by the electromagnet to operate the differential clutch gear; and
a return spring, positioned between the electromagnet and the shift rod, for constantly biasing the shift rod toward an original position thereof.

2. The power controlling device as claimed in claim 1, wherein the electromagnet is positioned within an interior of a differential case, and an electric current is applied to the electromagnet from an electric power of the vehicle.

3. The power controlling device as claimed in claim 1, wherein the shift rod has on one end thereof a fork engaging to the differential clutch gear.
